# EUROPÄISCHE PATENTSCHRIFT

(11) **EP 0 356 537 B1**
(45) Veröffentlichungstag und Bekanntmachung des Hinweises auf die Patenterteilung: **26.05.1993**
(21) Anmeldenummer: 88114017.2
(22) Anmeldetag: 27.08.1988
(51) Int. Cl.: C13G 1/04, C13G 1/00, B01D 1/26, B01D 1/12

(54) **Fallstromverdampfer-Anordnung**
Falling film evaporator arrangement
Agencement d'évaporateur à flux descendant

(43) Veröffentlichungstag der Anmeldung: 07.03.1990
(73) Patentinhaber: Braunschweigische Maschinenbauanstalt AG, 38122 Braunschweig (DE)
(72) Erfinder: Farwick, Erwin, Dipl.-Ing., D-3340 Wolfenbüttel (DE); Hennig, Gerhard, D-3340 Wolfenbüttel (DE)
(74) Vertreter: Einsel, Martin Dipl.-Phys.

(56) Entgegenhaltungen:
- DE-A- 2 103 889
- FR-A- 2 561 123
- FR-A- 2 596 748

## Beschreibung

Die Erfindung betrifft eine Fallstromverdampfer-Anordnung, insbesondere zum Eindampfen von Zuckersaft in der Zuckerindustrie.

Zum Eindampfen von Zuckersaft in der Zuckerindustrie werden Anlagen, bestehend aus einer Reihe von Fallstromverdampfern, verwendet, die nacheinander vom Zuckersaft durchströmt werden, um durch Verdampfung der Flüssigkeit aus dem Zuckersaft eine Erhöhung der Konzentration des Saftes zu erzielen. Wichtig ist dabei die Aufrechterhaltung der Benetzung der Rohrwandungen mit dem Zuckersaft, um Verkrustungen in den Heizrohren zu vermeiden.

Um bei zunehmender Eindampfung des Zuckersaftes eine kontinuierliche und vollständige Benetzung der Heizrohre zu gewährleisten, ist es bekannt, die Fallstromverdampfer bzw. Verdampfer-Anordnungen mit Einrichtungen zur Rezirkulation der einzudampfenden Flüssigkeit auszurüsten. Diese Einrichtungen erfordern eine Niveauregelung des Flüssigkeitsspiegels in den Flüssigkeitsräumen unterhalb der Heizkammern, um ein Leerlaufen der Flüssigkeitsräume und hiermit einhergehend eine Beschädigung der Rezirkulationspumpen sowie eine Verkrustung der ggf. nicht mehr voll benetzten Heizrohre zu vermeiden.

Bei den bekannten Anordnungen ist jeder Fallstromverdampfer mit Rezirkulation auch mit einer entsprechenden Niveauregelung und allen zugehörigen Steuer- und Regelungseinrichtungen ausgerüstet.

Es ist auch bekannt, den oder die letzten Fallstromverdampfer einer Verdampfungsanlage als segmentierte Verdampfer auszubilden, bei denen die Heizrohre der einzelnen Segmente nacheinander von der bereits weitgehend eingedickten Flüssigkeit durchströmt werden. Bei diesen segmentierten Fallstromverdampfern durchfließt die Flüssigkeit die Heizrohre der einzelnen Segmente nacheinander. Ohne eine Rezirkulation in den einzelnen Segmenten kann der Betriebszustand nur in einem engen Toleranzbereich vom Auslegungszustand abweichen, da eine Unterschreitung der bei der Auslegung angenommenen Durchflußmenge über den Toleranzbereich hinaus durch die Eindampfung des Zuckersaftes zu Verkrustungen in den Heizrohren führt.

Um auch hier Abhilfe zu schaffen, wurde bereits vorgeschlagen, segmentierte Fallstromverdampfer ebenfalls mit einer Rezirkulation für die einzelnen Segmente auszurüsten. Dabei ist jedoch ebenfalls für jedes Segment eine diesem zugeordnete Niveauregelung mit allen zugehörigen Steuerungs- und Regelungseinrichtungen erforderlich, um die bereits oben in Verbindung mit den unsegmentierten Verdampfern beschriebenen Nachteile zu vermeiden.

Der Erfindung liegt die Aufgabe zugrunde, eine Fallstromverdampfer-Anordnung mit einer Rezirkulation der Verdampferflüssigkeit so auszubilden, daß der Regelungsaufwand erheblich vermindert und der Betrieb der Anordnung auch bei großen Schwankungen der Flüssigkeitszufuhr aufrechterhalten werden kann.

Zur Lösung der vorstehenden Aufgabe weist die Verdampfer-Anordnung die im Anspruch 1 genannten Merkmale auf.

Bei einer kommunizierenden Verbindung aller Flüssigkeitsräume stellt sich automatisch in den miteinander verbundenen Räumen etwa das gleiche Flüssigkeitsniveau ein, welches durch den Niveauregler bestimmt wird, der in einem beliebigen, von der Flüssigkeit durchströmten Raum angeordnet werden kann.

Bei Verdampfern, deren Flüssigkeitsräume ausschließlich durch überströmbare Begrenzungswände voneinander getrennt sind, bestimmen die Begrenzungswände und der im letzten von der Flüssigkeit durchströmten Raum vorgesehene Niveauregler den Flüssigkeitsstand in den Flüssigkeitsräumen.

Wird bei Zufuhr einer geringen Flüssigkeitsmenge pro Zeiteinheit ein Absinken des Flüssigkeitsniveaus in allen oder dem zuletzt durchströmten Raum bewirkt, so erfolgt über den Niveauregler und das mit ihm verbundene Regelventil entweder eine Reduzierung der abströmenden Flüssigkeit oder, soweit dies möglich ist, eine Erhöhung des Zustromes der Flüssigkeit pro Zeiteinheit zu dem ersten Flüssigkeitsraum der Anordnung.

Wird hingegen durch erhöhten Zustrom der Flüssigkeit in allen oder dem zuletzt durchströmten Flüssigkeitsraum eine Anhebung des Niveaus bewirkt, so wird über den Niveauregler und das Regelventil entweder die Flüssigkeitszufuhr zu dem ersten Flüssigkeitsraum gedrosselt oder aber die pro Zeiteinheit aus der Anordnung abzuführende Flüssigkeitsmenge durch entsprechende Einstellung des Regelventiles erhöht.

Besonders vorteilhaft ist eine Fallstromverdampfer-Anordnung in der Form eines segmentierten Fallstromverdampfers mit den Merkmalen des Anspruches 2. Bei dieser Ausführung erfolgt innerhalb eines jeden Segmentes eine Rezirkulation der Flüssigkeit in der Weise, daß die jeweilige Kammer, welche nicht mit der Rezirkulationsleitung verbunden ist, ausschließlich mit der aus den Heizrohren des zugehörigen Segmentes austretenden Flüssigkeit gefüllt wird. Die in der vorgenannten Kammer befindliche unvermischte Flüssigkeit hat somit die höchste Konzentration, die in diesem Segment erreichbar ist. Die Flüssigkeit wird aus dieser Kammer dem nächsten Segment zugeführt, und zwar derjenigen Kammer dieses Segmentes, an die wiederum eine Rezirkulationsleitung und -pumpe angeschlossen ist. In dieser Kammer vermischt sich die zugeführte Flüssigkeit mit einem Teil der aus den Heizrohren dieses Segmentes austretenden rezirkulierten Flüssigkeit. Die andere Kammer des gleichen Segmentes wird hingegen wiederum nur mit der in diesem Segment rezirkulierten Flüssigkeit gefüllt und diese Flüssigkeit dann dem nächsten Segment zugeführt.

Die beschriebene Führung der Flüssigkeit setzt sich von Segment zu Segment fort bis zu der letztdurchströmten Kammer des letzten Segmentes, aus der die Abführung der durch die Verdampfung konzentrierten Lösung wiederum in unvermischter Form, d.h. ohne Vermischung mit der Lösung der vorhergehenden Kammer dieses Segmentes erfolgt.

Das Niveau in den einzelnen Kammern wird bei Anordnung von überströmbaren Trenn- und Begrenzungswänden durch die Höhe dieser Wände und in der letzten Kammer durch den Niveauregler bestimmt. Soweit mit der letztdurchströmten Kammer die zuvor durchströmten Kammern über Durchströmöffnungen im Bodenbereich der Trenn- bzw. Begrenzungswände in offener Verbindung stehen, bestimmt der Niveauregler das Flüssigkeitsniveau in den strömungsmäßig vorgeordneten anderen Kammern, wobei er in einer dieser Kammern angeordnet werden kann.

Die Zuführung der aus der Heizkammer des jeweiligen Segmentes austretenden Flüssigkeit ganz oder überwiegend in nur eine der beiden Kammern dieses Segmentes kann beispielsweise dadurch bewirkt werden, daß die mit der Rezirkulationsleitung verbundene Kammer einen wesentlich kleineren Querschnitt aufweist als die andere Kammer und somit automatisch der größte Anteil der aus den Heizrohren austretenden Flüssigkeit in die im Querschnitt größere Kammer überführt wird. Bei anderen Ausführungen kann unterhalb der dem jeweiligen Segment zugeordneten Heizkammer ein Flüssigkeitssammler vorgesehen sein, von dem aus eine Verbindungsleitung in die jeweilige Kammer des Segmentes führt, die nicht mit der Rezirkulationsleitung verbunden ist. Dabei kann die von dem Sammler zu der genannten Kammer führende Leitung in jeder beliebigen Höhe in der entsprechenden Kammer ausmünden. Man hat es also in der Hand, die aus der Heizkammer des jeweiligen Segmentes austretende Flüssigkeit in jeder beliebigen Höhenlage der genannten Kammer des Segmentes zuzuleiten. Je nach Art des vorgesehenen Übertrittes der Flüssigkeit aus dieser Kammer in die Kammer des nächsten Segmentes wird man die Zuleitung der aus der Heizkammer dieses Segmentes austretenden Flüssigkeit jeweils so vornehmen, daß die nicht mit der Rezirkulationsleitung verbundene Kammer im Zuge der Weiterführung der Flüssigkeit in Längsrichtung durchströmt wird. Auf diese Weise wird vermieden, daß in den einzelnen Kammern strömungsmäßige Toträume entstehen, in denen beim Eindampfen organischer Flüssigkeiten, wie Zuckersaft oder dgl., Zersetzungserscheinungen auftreten können.

Statt der mit den beschriebenen Sammlern verbundenen Leitungen bzw. Leitkanälen, die in der äußeren Umschließungswand des jeweiligen Segmentes vorgesehen sein können, ist es auch möglich, nur mit Leitblechen zu arbeiten, die unterhalb der Heizkammern des jeweiligen Segmentes angeordnet sind und über die die aus den Heizkammern austretende Flüssigkeit in jene Kammer des gleichen Segmentes geleitet wird, die nicht mit der Rezirkulationsleitung verbunden ist.

Weitere Ausbildungsformen von segmentierten Verdampfern mit ausschließlich überströmbaren Trenn- und Begrenzungswänden sowie ganz oder zum Teil über Durchströmöffnungen oder Rohrleitungen kommunizierenden Kammern sind in den Unteransprüchen 4 bis 8 angegeben.

Weitere vorteilhafte Ausgestaltungen der Anordnung, bestehend aus wenigstens zwei getrennten Verdampfern, sind in den Ansprüchen 9 und 10 beschrieben. Auch bei der Anordnung nach den Ansprüchen 9 und 10 wird die aus der jeweiligen Heizkammer des einzelnen Verdampfers austretende Flüssigkeit trotz der Rezirkulation unvermischt dem nächstfolgenden Verdampfer zugeleitet und hierdurch eine effektive Arbeitsweise der Anordnung sichergestellt. Der in dem letzten Auffangraum vorgesehene Niveauregler bestimmt durch die beschriebenen kommunizierenden Verbindungen zwischen den Auffangräumen des jeweils vorhergehenden Verdampfers mit dem Überlaufraum des nächstfolgenden Verdampfers das Niveau des Flüssigkeitsspiegels in sämtlichen Verdampfern in einer Weise, daß mit Sicherheit die in den Rezirkulationsleitungen befindlichen Pumpen nicht leerlaufen und auch eine kontinuerliche, vollständige Benetzung der Heizrohre bei sich änderndem Zustrom und sich ändernder Abführung der Flüssigkeit zu der Anordnung gewährleistet wird.

Die Zeichnung gibt Ausführungsbeispiele der Erfindung in schematischer Darstellung wieder.

Es zeigen:
- Fig. 1: die Seitenansicht eines segmentierten Fallstromverdampfers gemäß der Erfindung,
- Fig. 2: ein Schnittbild entlang der Schnittlinie A-A in Fig. 1,
- Fig. 3: eine erste Ausbildungsform des Verdampfers nach Fig. 1 in Form eines Fließbildes in Verbindung mit einer schematisierten Abwicklung des Verdampfers nach Fig. 1,
- Fig. 4: eine Darstellung gemäß Fig. 3 für eine andere Variante des Verdampfers nach Fig. 1,
- Fig. 5: eine Darstellung gemäß Fig. 3 für eine weitere Variante des Verdampfers nach Fig. 1,
- Fig. 6: eine Darstellung nach Fig. 3 für eine vierte Variante des Verdampfers nach Fig. 1,
- Fig. 7: die Seitenansicht einer Anordnung, bestehend aus zwei getrennten Verdampfern gemäß der Erfindung.

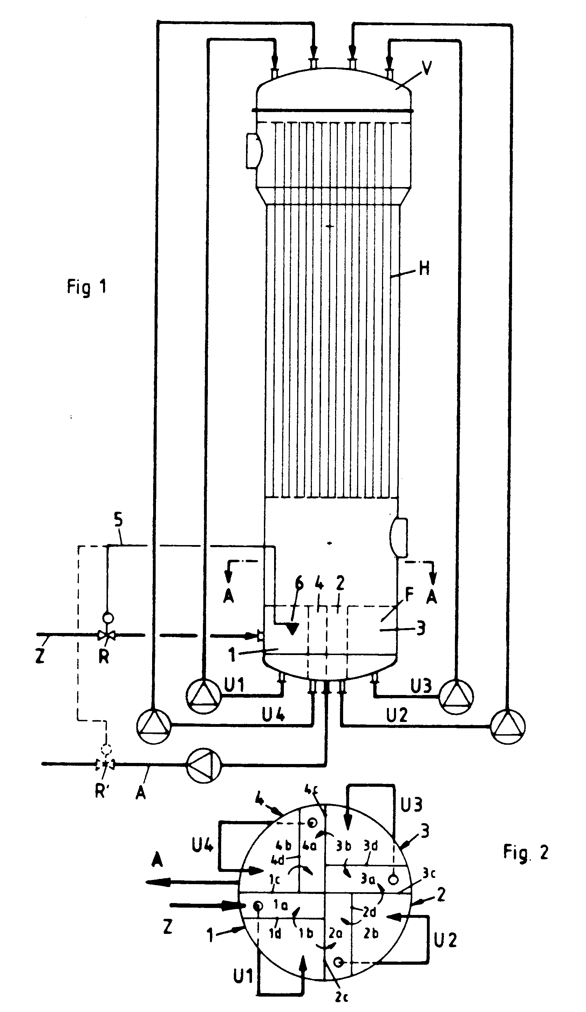

Der in der Fig. 1 wiedergegebene segmentierte Fallstromverdampfer weist in einem umschließenden Gehäuse an seinem oberen Ende einen Verteilerkopf V auf, über den die dem Verdampfer zugeführte bzw. innerhalb des Verdampfers rezirkulierte Flüssigkeit der Heizkammer H zugeleitet wird, in der schematisch angedeutete lotrecht verlaufende Rohre angeordnet sind, deren Innenwandungen von der Flüssigkeit in Form eines durchgehenden Filmes benetzt werden.

Unterhalb der Heizkammer H ist der insgesamt mit F bezeichnete Flüssigkeitsraum angedeutet, der im Falle der Ausgestaltung nach Fig. 1 durch entsprechende Segmentierung in insgesamt vier Flüssigkeitsräume 1 bis 4 unterteilt ist, die gemäß Fig. 2 jeweils einen Querschnitt in Form eines sich über einen Viertelkreis erstreckenden Kreissektors aufweisen. Die Flüssigkeitsräume 1 bis 4 sind jeweils in zwei Kammern 1a und 1b bis 4a und 4b unterteilt. Zwischen den Flüssigkeitsräumen 1 bis 4 sind Begrenzungswände 1c bis 4c vorgesehen, während zwischen den Kammern eines jeden Flüssigkeitsraumes Trennwände 1d bis 4d angeordnet sind.

Die Zuführung der Flüssigkeit zu dem Verdampfer erfolgt über die Zuleitung Z, welche in Fig. 2 durch einen entsprechenden Pfeil angedeutet ist. In dem dargestellten Beispiel wird die zugeführte Flüssigkeit dem Flüssigkeitsraum 1 bzw. der Kammer 1a zugeleitet. Die Abführung der den Verdampfer verlassenden Flüssigkeit erfolgt durch die Leitung A, welche in Fig. 2 wiederum durch einen Pfeil schematisch angedeutet ist. In dem dargestellten Beispiel wird die Flüssigkeit aus dem Flüssigkeitsraum 4 bzw. der Kammer 4b abgeführt. In der Zuführungsleitung Z ist ein Regelventil R angeordnet. Gestrichelt angedeutet ist in Fig. 1, daß ein derartiges Regelventil R' auch in der Abführungsleitung A vorgesehen sein kann.

Das Regelventil R ist über eine Leitung 5 mit einem Niveauregler 6 verbunden, der das Regelventil R in Abhängigkeit von dem jeweiligen Flüssigkeitsspiegel in dem letztdurchströmten Flüssigkeitsraum 4 bzw. der Kammer 4b steuert.

Zwischen den Flüssigkeitsräumen 1 bis 4 und dem Verteilerkopf V sind Rezirkulationsleitungen U1 bis U4 mit jeweils in diesen Leitungen angeordneten Rezirkulationspumpen vorgesehen.

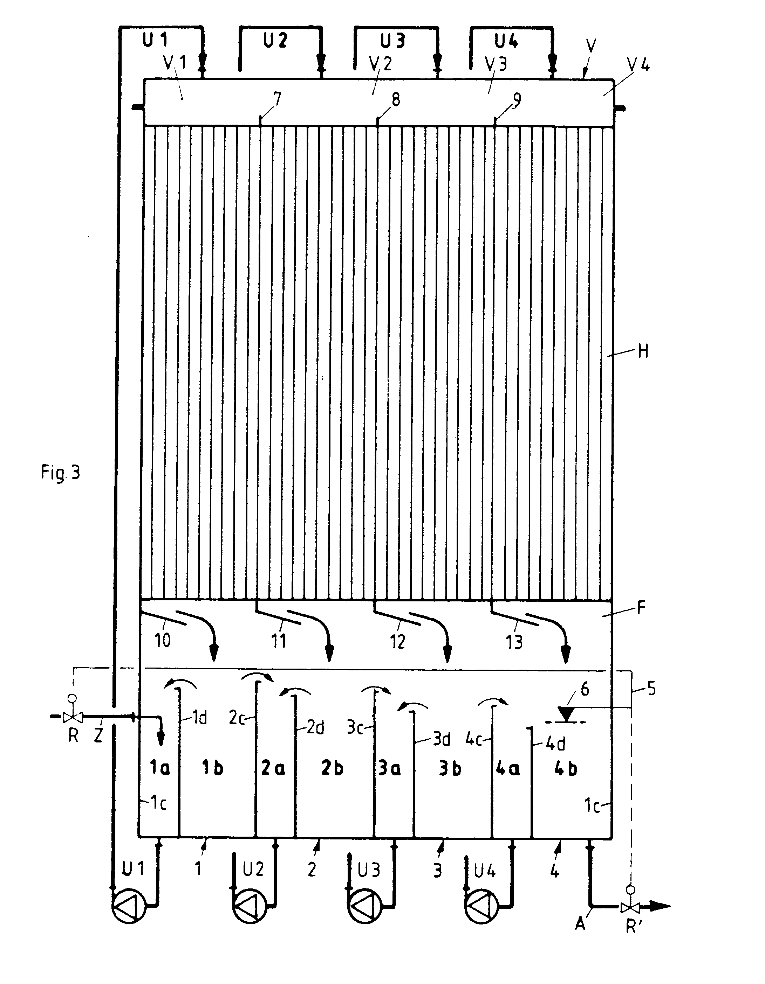

In den schematischen Fig. 3 bis 6 ist angedeutet, daß der Verteilerkopf V entsprechend den Flüssigkeitsräumen 1 bis 4 durch entsprechende Trennwände 7 bis 9 unterteilt ist, so daß sich Verteilerkopfräume V1 bis V4 ergeben.

Alle in den Fig. 3 bis 6 wiedergegebenen Ausführungsformen des Verdampfers entsprechend der prinzipiellen Anordnung nach den Fig. 1 und 2 sind so ausgeführt, daß die aus der Heizkammer oberhalb des jeweiligen Flüssigkeitsraumes austretende Flüssigkeit jeweils in diejenige Kammer 1b bis 4b geleitet wird, die nicht mit der Rezirkulationsleitung U1 bis U4 verbunden ist. Zu diesem Zweck sind unterhalb der Heizkammer H in den dargestellten Beispielen der Fig. 3 bis 6 Leitbleche 10 bis 13 vorgesehen.

In dem Beispiel der Fig. 3 sind die Trennwände 1d bis 4d zur Bildung der Kammern 1a und 1b bis 4a und 4b sowie auch die Begrenzungswände 1c bis 4c zwischen den Flüssigkeitsräumen 1 bis 4 als ausschließlich überströmbare Wände ausgebildet. Dabei sind die Begrenzungswände 1c bis 4c und die Trennwände 1d bis 4d jeweils in Durchströmrichtung der Flüssigkeit durch die Flüssigkeitsräume abnehmend abgestuft und die Höhe der Trennwände 1d bis 4d zwischen den einzelnen Kammern der Flüssigkeitsräume in ihrer Höhe geringer bemessen als die Höhe der Begrenzungswände 1c bis 4c.

Die Anordnung nach Fig. 3 arbeitet wie folgt:
Die in die Kammer 1a über die Zuleitung Z zugeführte Flüssigkeit vermischt sich mit aus der Kammer 1b über die Trennwand 1d überströmende Flüssigkeit und wird als Gemisch über die Rezirkulationsleitung U1 mit der darin vorgesehenen Pumpe in den Verteilerkopfraum V1 überführt. Diese Flüssigkeit gelangt nach Durchströmen der Heizkammer H in die Kammer 1b, wobei die oberhalb der Kammer 1a aus der Heizkammer H austretende Flüssigkeit über das Leitblech 10 in die Kammer 1b des Flüssigkeitsraumes 1 abgelenkt wird, wie dies mit einem Strömungspfeil angedeutet ist.

Aus der Kammer 1b des Flüssigkeitsraumes 1 gelangt bei entsprechender Menge der rezirkulierten Flüssigkeit ein Teil der Flüssigkeit durch Überströmen der Trennwand 2c in die Kammer 2a des Flüssigkeitsraumes 2. Diese Flüssigkeit in der Kammer 2a vermischt sich mit aus der Kammer 2b über die Trennwand 2d überströmenden Flüssigkeit und wird als Gemisch über die Rezirkulationsleitung U2 dem Verteilerkopfraum V2 zugeführt, um nach Durchströmen der Heizkammer H und teilweiser Umlenkung durch das Leitblech 11 in die Kammer 2b zu gelangen. Aus dieser Kammer strömt ein Teil der Flüssigkeit über die Trennwand 2d zurück in die Kammer 2a und ein weiterer Teil über die Begrenzungswand 3c in die Kammer 3a des Flüssigkeitsraumes 3.

Von hier aus wird die Flüssigkeit in der bereits vorgeschriebenen Weise über die Kammer 3b und 4a bis in die letzte Kammer 4b geleitet, aus der über die Abführungsleitung A dann die Abführung eines Teiles der eingedickten Flüssigkeit erfolgt, während durch die Stellung des Niveaureglers 6 oberhalb der Trennwand 4d ein weiterer Teil der Flüssigkeit in die Kammer 4a zurückströmt.

Wenn sich in der letztdurchströmten Kammer 4b der Flüssigkeitsspiegel ändert, so wird über den dort vorgesehenen Flüssigkeitsregler 6 und die Steuerleitung 5 das Regelventil R in der Zuleitung Z entsprechend betätigt und entweder die Zufuhr der Flüssigkeit erhöht oder aber gedrosselt, je nachdem ob der Flüssigkeitsspiegel in der Kammer 4b ansteigt oder absinkt.

Statt einer Regelung der dem Verdampfer zuzuführenden Flüssigkeit über das Regelventil R kann auch gemäß der strichpunktierten Andeutung über ein Regelventil R' in der Abführungsleitung eine Erhöhung oder Drosselung der abzuführenden Flüssigkeit erfolgen. Es stellt sich durch die Trenn- und Begrenzungswände 1c bis 4c und 1d bis 4d in Verbindung mit dem Niveauregler 6 in allen Kammern ein solcher Flüssigkeitsspiegel ein, daß in jeder Kammer eine hinreichende Rezirkulation der Flüssigkeit und damit eine vollständige Benetzung der in der Heizkammer befindlichen Rohre durch die Flüssigkeit gewährleistet bleibt, auch wenn erhebliche Schwankungen in der Zufuhr der Flüssigkeit zu dem Verdampfer eintreten sollten. Dabei wird erreicht, daß eine Vermischung der in die Kammern 1b bis 4b eintretenden Flüssigkeit vermieden wird. Diese unvermischte Flüssigkeit hat somit die höchste Konzentration, die in dem jeweiligen Flüssigkeitsraum 1 bis 4 erreichbar ist. Nur diese Flüssigkeit wird in Strömungsrichtung dem nächstfolgenden Flüssigkeitsraum bzw. der nächstfolgenden Kammer zugeleitet.

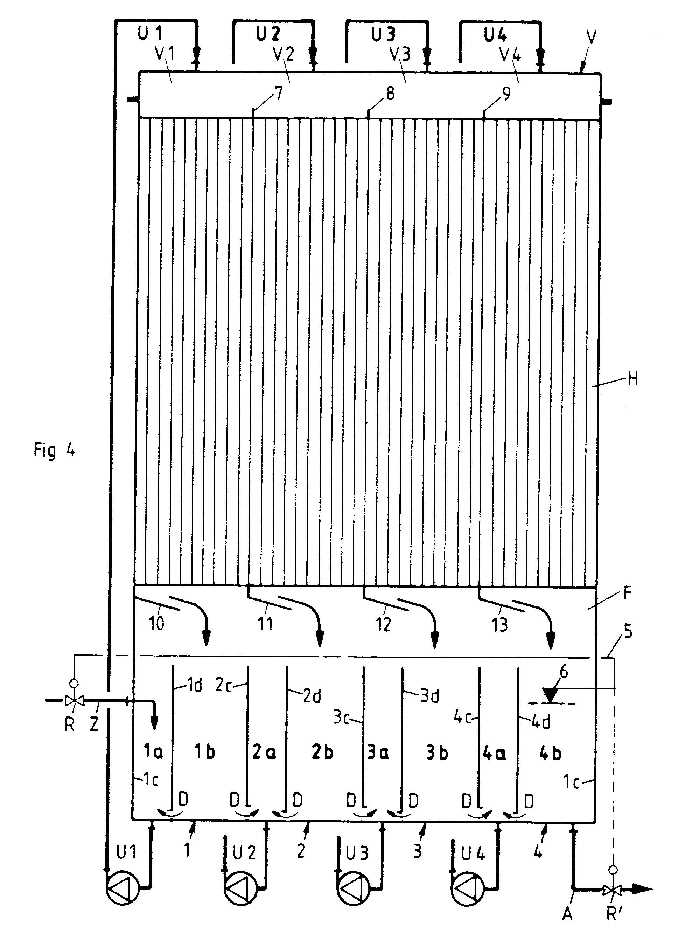

Die Anordnung nach Fig. 4 unterscheidet sich von der Anordnung nach Fig. 3 dadurch, daß statt der überströmbaren Begrenzungs- und Trennwände 1c bis 4c und 1d bis 4d in den vorgenannten Wänden im Bodenbereich Durchströmöffnungen D, beispielsweise in Form von Durchtrittsschlitzen, vorgesehen sind, durch welche aus den jeweiligen Kammern 1b bis 4b die Flüssigkeit in die Kammern 1a bis 4a einströmt, wie dies durch Pfeile in der Fig. 4 angedeutet ist.

Bei dieser Anordnung wird durch den Niveauregler 6 in der letztdurchströmten Kammer 4b das Niveau in allen vorhergehenden Kammern bestimmt. Bei absinkendem Niveau in der Kammer 4b wird über den Niveauregler 6 und die Leitung 5 das Regelventil R in der Zuleitung Z weiter geöffnet, so daß pro Zeiteinheit durch diese Zuleitung eine größere Menge der Flüssigkeit in den Verdampfer eingeleitet wird und hierdurch der Pegel in den einzelnen Kammern entsprechend angehoben wird. Umgekehrt wird bei steigendem Niveau in der Kammer 4b über den Niveauregler die Zufuhr der Flüssigkeit zu dem Verdampfer entsprechend gedrosselt. Die beschriebene Niveauregelung kann aber auch mittels des Niveaureglers 6 durch Betätigung des Regelventiles R' in der Abführungsleitung A erfolgen, wie dies im Zusammenhang mit der Fig. 3 bereits erläutert wurde.

Da alle Kammern durch die in den Begrenzungs- und Trennwänden vorgesehenen Durchströmöffnungen kommunizierend miteinander verbunden sind, ergibt sich automatisch ein stetiger Niveauausgleich in diesen Kammern und es kann der Niveauregler in jeder der Kammern angeordnet werden. Die Begrenzungs- und Trennwände der Anordnung nach Fig. 4 erstrecken sich sämtlich bis oberhalb des Flüssigkeitsniveaus.

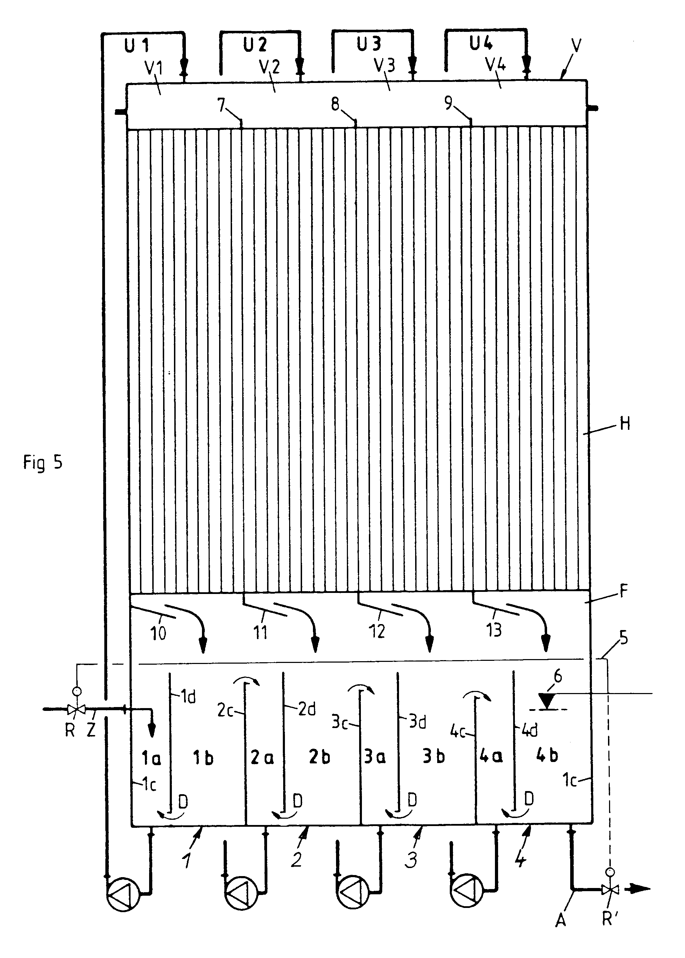

Bei der Anordnung nach Fig. 5 sind die Trennwände 1d bis 4d mit im Bodenbereich vorgesehenen Durchtrittsöffnungen D ausgerüstet, während die Begrenzungswände 1c bis 4c als überströmbare Trennwände ohne Durchtrittsöffnungen ausgebildet sind. Um einen Übertritt der Flüssigkeit über die Begrenzungswände 2c bis 4c zu gewährleisten, sind die Begrenzungswände in Strömungsrichtung gesehen in ihrer Höhe abnehmend abgestuft, ähnlich wie dies bei der Anordnung nach Fig. 3 vorgesehen ist, wobei dort jedoch sowohl die Begrenzungs- als auch die Trennwände, in Strömungsrichtung gesehen, jeweils eine Abstufung aufweisen. Da bei der Lösung nach Fig. 5 die letzten Kammern 4a und 4b kommunizierend miteinander verbunden sind, ist der Niveauregler 6 in der Kammer 4b unterhalb des oberen Endes der Trennwand 4d angeordnet.

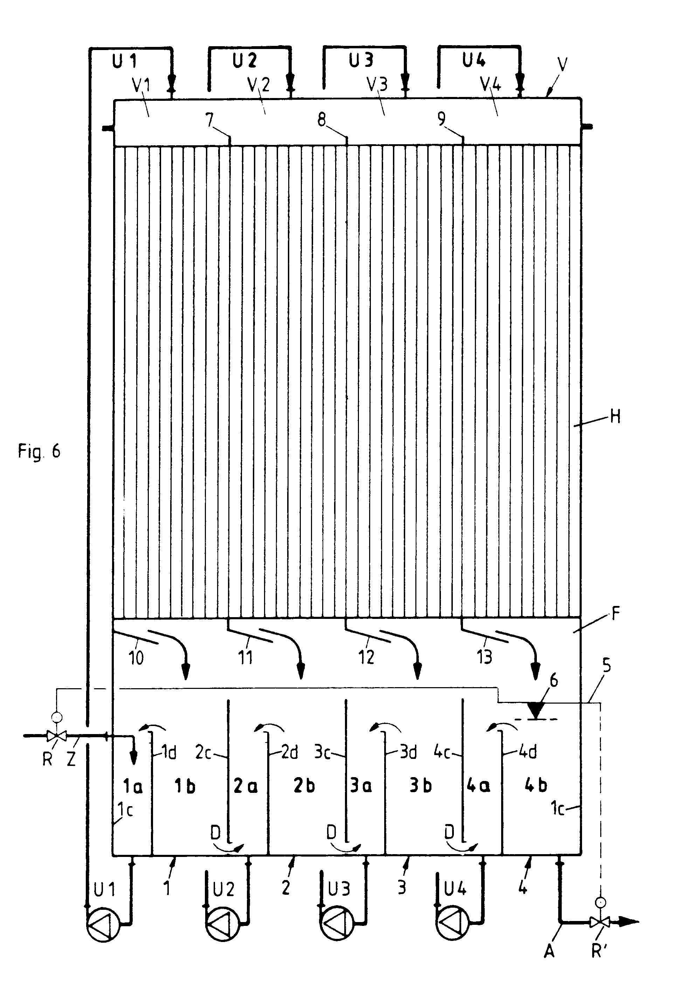

Bei der Anordnung nach Fig. 6 sind die Trennwände 2c bis 4c mit Durchtrittsöffnungen D im Bodenbereich ausgerüstet, während die Trennwände 1d bis 4d ohne derartige Durchströmöffnungen als überströmbare Wände ausgeführt sind. In diesem Falle weisen die Begrenzungswände 2c bis 4c eine größere Höhe auf als die Trennwände 1d bis 4d. Die Trennwände 1d bis 4d sind bei dieser Ausgestaltung nicht abgestuft, sondern zeigen die gleiche Höhe, da über sie eine Rückströmung der Flüssigkeit aus den Kammern 1b bis 4b in die vorhergehenden Kammern 1a bis 4a gemäß den eingetragenen Pfeilen in Fig. 6 erfolgt. Der Niveauregler 6 ist zur Erzielung der Rückströmung aus der Kammer 4b in die Kammer 4a oberhalb der Trennwand 4d gehalten.

Bei allen Ausführungsformen nach den Fig. 3 bis 6 kann insbesondere zur sicheren Inbetriebnahme eine Höheneinstellung des Niveaureglers 6 bis über die Trenn- bzw. Begrenzungswände erfolgen und ein entsprechend hoher Flüssigkeitsstand eingestellt werden. Hierdurch ergibt sich zwar eine ungünstige Wirkungsweise der Anordnung, jedoch bleibt die Funktionstüchtigkeit des Verdampfers erhalten. Es kann dann durch die Niveauregelung eine Verbesserung des Wirkungsgrades erreicht und dabei sichergestellt werden, daß sämtliche Pumpen in den Rezirkulationsleitungen U1 bis U4 nicht leerlaufen können.

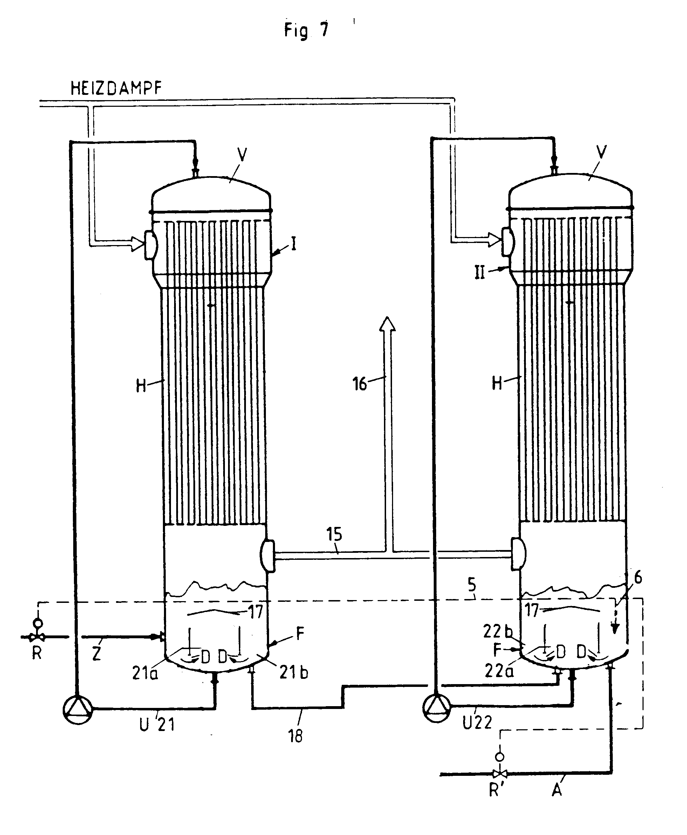

Bei der Anordnung nach Fig. 7 sind zwei getrennte Verdampfer I und II vorgesehen, deren Brüdenräume über eine Druckausgleichsleitung 15 miteinander verbunden sind. An diese Druckausgleichsleitung 15 schließt sich eine Brüdenabführungsleitung 16 an.

Der unterhalb der Heizkammern H vorgesehene Flüssigkeitraum F eines jeden Verdampfers ist in einen Auffangraum 21b und einen Überlaufraum 21a unterteilt. Zur Überführung der aus der Heizkammer austretenden Flüssigkeit in den Auffangraum 21b bzw. 22b sind oberhalb der Überlaufräume 21a und 22a jeweils umgekehrt tellerförmige Leitbleche 17 vorgesehen.

Analog den Anordnungen nach den Fig. 3 bis 6 wird die dem Verdampfer I zuzuführende Flüssigkeit über die Zuleitung Z mit dem darin vorgesehenen Regelventil R in den Überlaufraum 21a eingeleitet, in dem eine Vermischung dieser Flüssigkeit mit der aus dem Auffangraum 21b durch die Durchströmöffnungen D hindurchtretenden Flüssigkeit erfolgt. Aus dem Überlaufraum 21a sowie dem Überlaufraum 22a wird die Flüssigkeit über die Rezirkulationsleitungen U21 bzw. U22 dem jeweiligen Verteilerkopf V des Verdampfers I bzw. II zugeführt.

Der Auffangraum 21b des Verdampfers I ist über die Leitung 18 mit dem Überlaufraum 22a des Verdampfers II kommunizierend verbunden.

In dem Auffangraum 22b des Verdampfers II ist der Niveauregler 6 angeordnet, der über die Leitung 5 mit dem Regelventil R in der Zuleitung Z und/oder mit dem Regelventil R' in der Abführungsleitung A verbunden ist.

Die aus den Verdampfern I und II bestehende Anordnung kann jeweils analog der beschriebenen Anordnungen nach den Fig. 3 bis 6 aufgebaut sein. Je nach Art der Rückführung der Flüssigkeit durch Durchströmöffnungen oder aber mittels überströmbarer Trennwände ergibt sich hierbei die gleiche Arbeitsweise, wie sie im Zusammenhang mit den Fig. 3 bis 6 beschrieben wurde. Dabei können auch mehr als zwei Verdampfer zu einer Anordnung ähnlich Fig. 7 zusammengefaßt sein.

Sowohl die Anordnungen mit segmentierten Verdampfern gemäß den Fig. 1 bis 6 als auch die Anordnung gemäß Fig. 7 haben den weiteren großen Vorteil, daß beim Ausfall einer der in den Rezirkulationsleitungen vorgesehenen Pumpen die Anordnung nicht stillgesetzt werden muß, sondern in Betrieb bleiben kann. Durch den Flüssigkeitsraum des Verdampfers bzw. des Segmentes mit der defekten Pumpe wird die Flüssigkeit dann lediglich hindurchgeführt, ohne die zugeordnete Heizkammer zu passieren. Es kann demgemäß die defekte Pumpe während des Betriebes ausgetauscht und der vorübergehend ausgefallene Verdampfer bzw. das vorübergehend ausgefallene Segment wieder in Funktion gesetzt werden.

## Patentansprüche

1. Fallstromverdampfer-Anordnung, insbesondere zum Eindampfen von Zuckersaft in der Zuckerindustrie, entweder in der Form eines segmentierten Fallstromverdampfers oder bestehend aus wenigstens zwei getrennten Verdampfern (I,II) deren Brüdenräume druckausgleichend miteinander verbunden sind und deren unterhalb der Heizkammern (H) vorgesehene Flüssigkeitsräume (F) eine etwa gleiche Höhenlage aufweisen, wobei die Anordnung mit Einrichtungen zur Rezirkulation der einzudampfenden Flüssigkeit ausgerüstet ist, **dadurch gekennzeichnet**, daß die Flüssigkeitsräume nach Art kommunizierender Röhren miteinander verbunden oder wenigstens teilweise durch überströmbare, die Niveauhöhe in den Flüssigkeitsräumen bestimmende Begrenzungswände voneinander getrennt sind, und daß nur ein höheneinstellbarer Niveauregler (6) vorgesehen ist, welcher mit einem in der Zuleitung (Z) der Flüssigkeit zu dem ersten und/oder einem in der Abführungsleitung (A) für die Flüssigkeit aus dem letzten Flüssigkeitsraum angeordneten Regelventil (R; R') verbunden und in dem letztdurchströmten Flüssigkeitsraum oder einem anderen Flüssigkeitsraum angeordnet ist, von dem aus er das Niveau des letztdurchströmten Flüssigkeitsraumes bestimmt.

2. Anordnung nach Anspruch 1 in der Form eines segmentierten Fallstromverdampfers, **dadurch gekennzeichnet**, daß die Flüssigkeitsräume (1 bis 4) eines jeden Segmentes durch eine lotrechte Trennwand (1d bis 4d) in zwei Kammern (1a,1b bis 4a,4b) unterteilt sind, daß jeweils an die eine Kammer (1a bis 4a) eine Rezirkulationsleitung (U1 bis U4) und -pumpe angeschlossen ist, und daß die Zuführung der aus der Heizkammer (H) oberhalb des jeweiligen Flüssigkeitsraumes austretenden Flüssigkeit ganz oder überwiegend in die andere Kammer (1b bis 4b) erfolgt und auch die Kammern nach Art kommunizierender Röhren miteinander verbunden oder die Trennwände wenigstens teilweise als überströmbare Wände ausgebildet sind.

3. Anordnung nach Anspruch 2, **dadurch gekennzeichnet**, daß zur Zuführung der aus der Heizkammer (H) austretenden Flüssigkeit in die jeweilige Kammer (1b bis 4b), der die Flüssigkeit ganz oder überwiegend zugeführt wird, Leitbleche (10 bis 13) oder Leitkanäle vorgesehen sind.

4. Anordnung nach Anspruch 2 oder 3, **gekennzeichnet durch** eine Ausbildung mit ausschließlich überströmbaren Trenn- und Begrenzungswänden (1c bis 4c bzw. 1d bis 4d), wobei die Trennwände (1d bis 4d) zwischen den Kammern (1a bis 4b) und die Begrenzungswände (1c bis 4c) zwischen benachbarten Flüssigkeitsräumen (1 bis 4) jeweils in Durchströmrichtung der Flüssigkeit abnehmend abgestuft sind und die Höhe der Trennwände (1d bis 4d) zwischen den Kammern geringer ist als die Höhe der Begrenzungswände (1c bis 4c) zwischen benachbarten Flüssigkeitsräumen, und wobei der Niveauregler (6) oberhalb der Trennwand (4d) der letztdurchströmten Kammer (4b) gehalten ist.

5. Anordnung nach einem der Ansprüche 2 oder 3, **dadurch gekennzeichnet**, daß sowohl die Begrenzungswände (1c bis 4c) als auch die Trennwände (1d bis 4d) im Bodenbereich mit Durchströmöffnungen (D) oder Rohrleitungen zur offenen Verbindung der benachbarten Kammern (1a bis 4b) ausgerüstet sind, und daß die Begrenzungswände und die Trennwände oberhalb des Niveaureglers (6) enden.

6. Anordnung nach einem der Ansprüche 2 oder 3, **dadurch gekennzeichnet**, daß die Trennwände (1d bis 4d) die zugeordneten Begrenzungswände (1c bis 4c) in der Höhe überragen und im Bodenbereich mit Durchströmöffnungen (D) oder Rohrleitungen zur offenen Verbindung der benachbarten Kammern (1a,1b bis 4a,4b) eines jeden Flüssigkeitsraumes (1 bis 4) ausgerüstet sind, und daß die Begrenzungswände (1c bis 4c) der Flüssigkeitsräume in Durchströmrichtung in ihrer Höhe abnehmend abgestuft sind und der Niveauregler unterhalb des oberen Endes der Trennwand (4d) in dem letztdurchströmten Flüssigkeitsraum (4) gehalten ist.

7. Anordnung nach einem der Ansprüche 2 oder 3, **dadurch gekennzeichnet**, daß alle Begrenzungswände (1c bis 4c) oberhalb der Trennwände (1d bis 4d) enden und im Bodenbereich mit Durchströmöffnungen (D) oder Rohrleitungen zur offenen Verbindung mit den benachbarten Kammern (2a bis 4a) ausgerüstet sind, und daß die Trennwände (1d bis 4d) eine gleiche, jedoch geringere Höhe als die Begrenzungswände aufweisen und der Niveauregler (6) oberhalb der Trennwand (4d) der letztdurchströmten Kammer (4b) gehalten ist.

8. Anordnung nach einem der Ansprüche 1 bis 7, **dadurch gekennzeichnet**, daß der Niveauregler (6) auf eine Höhe oberhalb der höchsten Trenn- oder Begrenzungswand einstellbar ist.

9. Anordnung, bestehend aus wenigstens zwei getrennten Verdampfern nach Anspruch 1, deren Flüssigkeitsräume (F) unterhalb einer jeden Heizkammer (H) in einen Auffang- sowie Überlaufraum (21b,21a bzw. 22b,22a) unterteilt sind, und bei denen die aus der Heizkammer austretende Flüssigkeit ganz oder überwiegend in den Auffangraum (21b;22b) zugeführt wird und an jeden Überlaufraum (21a;22a) eine Rezirkulationsleitung (U21;U22) und -pumpe angeschlossen ist, **dadurch gekennzeichnet**, daß der Auffangraum (21b; 22b) eines jeden Verdampfers (I; II) mit dem Überlaufraum (21a;22a) des in Strömungsrichtung nachgeordneten Verdampfers nach Art kommunizierender Röhren verbunden ist, und daß der Niveauregler (6) einem der kommunizierend verbundenen Räume zugeordnet ist.

10. Anordnung nach Anspruch 9, **dadurch gekennzeichnet**, daß die Trennwände zwischen den Überlauf- und Auffangräumen (21a,21b bzw. 22a,22b) im Bodenbereich mit Durchströmöffnungen oder Rohrleitungen zur offenen Verbindung des Überlauf- und Auffangraumes des jeweiligen Verdampfers (I bzw. II) ausgerüstet sind.

## Claims

1. Falling flow evaporator arrangement, in particular for boiling down sugar juice in the sugar industry, either in the form of a segmental falling flow evaporator or comprising at least two separate evaporators (I, II) whereof the vapour spaces are connected to one another in a pressure-compensating manner and whereof the liquid spaces (F) provided below the heating chambers (H) are arranged at approximately the same height, the arrangement being provided with means for recirculation of the liquid to be boiled down, characterized in that the liquid spaces are connected to one another in the manner of communicating pipes, or are at least partly separated from each other by delimitation walls which determine the level in the liquid spaces and over which flow is possible, and in that only one height-adjustable level regulator (6) is provided, which is connected to a regulating valve (R; R') located in the inlet line (Z) of the liquid to the first liquid space and/or a regulating valve (R; R') located in the outlet line (A) for the liquid from the last liquid space, and this level regulator (6) is arranged in the last liquid space flowed through or another liquid space from which it determines the level of the last liquid space flowed through.

2. Arrangement according to Claim 1 in the form of a segmental falling flow evaporator, characterized in that the liquid spaces (1 to 4) of each segment are divided into two chambers (1a, 1b to 4a, 4b) by a perpendicular separation wall (1d to 4d), in that in each case a recirculation line (U1 to U4) and recirculation pump are connected to the one chamber (1a to 4a), and in that all or most of the liquid emerging from the heating chamber (H) above each liquid space is fed to the other chamber (1b to 4b), and the chambers are also connected to one another in the manner of communicating pipes, or the separation walls are at least partly formed as walls over which flow is possible.

3. Arrangement according to Claim 2, characterized in that guide plates (10 to 13) or guide channels are provided to feed the liquid emerging from the heating chamber (H) to the respective chamber (1b to 4b), to which all or most of the liquid is fed.

4. Arrangement according to Claim 2 or 3, characterized by a construction with separation and delimitation walls (1c to 4c and 1d to 4d) which can only be flowed over, the separation walls (1d to 4d) between the chambers (1a to 4b) and the delimitation walls (1c to 4c) between adjacent liquid spaces (1 to 4) each being stepped to reduce in height in the direction of throughflow of the liquid, and the height of the separation walls (1d to 4d) between the chambers being smaller than the height of the delimitation walls (1c to 4c) between adjacent liquid spaces, and the level regulator (6) being kept above the separation wall (4d) of the last chamber (4b) flowed through.

5. Arrangement according to one of Claims 2 or 3, characterized in that both the delimitation walls (1c to 4c) and the separation walls (1d to 4d) are provided, in the floor area, with throughflow openings (D) or pipelines for open connection with the adjacent chambers (1a to 4b), and in that the delimitation walls and the separation walls end above the level regulator (6).

6. Arrangement according to one of Claims 2 or 3, characterized in that the separation walls (1d to 4d) project in height above the associated delimitation walls (1c to 4c) and are provided, in the floor area, with throughflow openings (D) or pipelines for open connection with the adjacent chambers (1a, 1b to 4a, 4b) of each liquid space (1 to 4), and in that the delimitation walls (1c to 4c) of the liquid spaces are stepped to reduce in height in the direction of throughflow, and the level regulator is kept below the upper end of the separation wall (4d) in the last liquid space (4) flowed through.

7. Arrangement according to one of Claims 2 or 3, characterized in that all the delimitation walls (1c to 4c) end above the separation walls (1d to 4d) and are provided, in the floor area, with throughflow openings (D) or pipelines for open connection with the adjacent chambers (2a to 4a), and in that the separation walls (1d to 4d) are of the same height which is, however, lower than that of the delimitation walls, and the level regulator (6) is kept above the separation wall (4d) of the last chamber (4b) flowed through.

8. Arrangement according to one of Claims 1 to 7, characterized in that the level regulator (6) can be adjusted to a height above the highest separation or delimitation wall.

9. Arrangement, comprising at least two separate evaporators according to Claim 1, whereof the liquid spaces (F) below each heating chamber (H) are divided into a collection space and an overflow space (21b, 21a and 22b, 22a respectively), and in which all or most of the liquid emerging from the heating chamber is fed to the collection space (21b; 22b), and a recirculation line (U21; U22) and recirculation pump are connected to each overflow space (21a; 22a), characterized in that the collection space (21b; 22b) of each evaporator (I; II) is connected to the overflow space (21a; 22a) of the evaporator arranged downstream in the direction of flow, in the manner of communicating pipes, and in that the level regulator (6) is associated with one of the spaces which are connected in communicating manner.

10. Arrangement according to Claim 9, characterized in that the separation walls between the overflow spaces and collection spaces (21a, 21b and 22a, 22b respectively) are provided, in the floor area, with throughflow openings or pipelines for open connection of the overflow space and collection space of the respective evaporator (I and II respectively).

## Revendications

1. Agencement d'évaporateur à flux descendant, en particulier pour concentrer du jus de sucre dans l'industrie sucrière, se présentant soit sous la forme d'un évaporateur à flux descendant segmenté, sois composé d'au moins deux évaporateurs (I;II) séparés, dont les enceintes à buées sont reliées ensemble, en vue d'opérer un équilibrage de la pression, et dont les enceintes à liquide (F), prévues au-dessous des chambre de chauffage (H), présentent une position en hauteur à peu près égale, l'agencement étant équipé de dispositifs de recirculation du liquide à concentrer, caractérisé en ce que les enceintes à liquide sont reliées ensemble à la façon de tubes communicants ou au moins partiellement séparées les unes des autres au moyen de parois de limitation, pouvant être franchies par un débordement et déterminant la hauteur du niveau dans les enceintes à liquide, et en ce qu'est prévu un seul régulateur de niveau (6), réglable en hauteur, relié à une soupape de réglage (R) disposée dans la conduite d'amenée (Z) du liquide qui mène à la première enceinte à liquide et/ou à une soupape de réglage (R') disposée dans la conduite d'évacuation (A) pour le liquide sortant de la dernière enceinte à liquide et régulateur de niveau (6) disposé dans la dernière enceinte à liquide ayant été traversée par le courant ou dans une autre enceinte à liquide, d'où il détermine le niveau du liquide dans la dernière enceinte à liquide traversée par le courant.

2. Agencement selon la revendication 1, se présentant sous la forme d'un évaporateur à flux descendant segmenté, caractérisé en ce que les enceintes à liquide (1 à 4) de chaque segment sont subdivisées, au moyen d'une paroi de séparation (1d à 4d) verticale, en formant deux chambres (1a,1b à 4a,4b), en ce que chaque fois, une conduite de recirculation (U1 à U4) et une pompe de recirculation sont raccordées à une chambre (1a à 4a), et en ce que l'amenée du liquide sortant de la chambre de chauffage (H), au-dessus de l'enceinte à liquide respective, s'effectue en totalité ou principalement dans l'autre chambre (1b à 4b) et les chambres étant également reliées ensemble à la façon de tubes communicants ou les parois de séparation étant réalisées au moins partiellement sous forme de paroi de déversement.

3. Agencement selon la revendication 2, caractérisé en ce que des tôles de guidage (10 à 13) ou des canaux de guidage sont prévus pour assurer l'amenée du liquide sortant de la chambre de chauffage (H) dans la chambre (1n à 4b) spécifique à laquelle le liquide est amené en totalité ou principalement.

4. Agencement selon la revendication 2 ou 3, caractérisé par une réalisation utilisant exclusivement des parois de séparation et de délimitation (1c à 4c, respectivement 1d à 4d) pouvant être franchies par un débordement, les parois de séparation (1d à 4d) situées entre les chambres (1a à 4a) et les parois de limitation (1c à 4c) situées entre les enceintes à liquide voisines étant chaque fois étagées en descendant, dans le sens d'écoulement du liquide, et la hauteur des parois de séparation (1d à 4d) situées entre les chambres étant inférieure à la hauteur des parois de limitation (1c à 4c) situées entre les enceintes à liquide voisines, et où le régulateur de niveau (6) étant maintenu au-dessus de la paroi de séparation (4d) de la dernière chambre (4b) parcourue par l'écoulement.

5. Agencement selon l'une des revendications 2 ou 3, caractérisé en ce que tant les parois délimitation (1c à 4c) qu'également les parois de séparation (1d à 4d) sont équipées, dans la zone de fond, d'ouvertures de passage (D) ou de tuyauteries, pour établir une liaison ouverte des chambres voisines (1a à 4b), et en ce que les parois de limitation et les parois de séparation finissent au-dessus du régulateur de niveau (6).

6. Agencement selon l'une des revendications 2 ou 3, caractérisé en ce que les parois de séparation (1d à 4d) dépassent en hauteur au-dessus des parois de délimitation (1c à 4c) associées et sont équipées, dans la zone de fond, d'ouvertures de passage (D) ou de tuyauteries, pour établir une liaison ouverte des chambres voisines (1a,1b à 4a,4b) de chaque enceinte à liquide (1 à 4), et en ce que les parois de limitation (1c à 4c) des enceintes à liquide sont chaque fois étagées en descendant, dans le sens d'écoulement du liquide, et le régulateur de niveau étant maintenu au-dessous de l'extrémité supérieur de la paroi de séparation (4d) dans la dernière enceinte à liquide (4) parcourue par l'écoulement.

7. Agencement selon l'une des revendications 2 ou 3, caractérisé en ce que toutes les parois de délimitation (1c à 4c) finissent au-dessus des parois de séparation (1d à 4d) et sont équipées, dans la zone de fond, d'ouvertures de passage (D) ou de tuyauteries, pour établir une liaison ouverte des chambres voisines (2a à 4a), et en ce que les parois de séparation (1d à 4d) présentent une hauteur identique, cependant inférieure aux parois de limitation et le régulateur de niveau (6) étant maintenu au-dessous de la paroi de séparation (4d) de la dernière chambre (4b) parcourue par l'écoulement.

8. Agencement selon l'une des revendications 1 à 7, caractérisé en ce que le régulateur de niveau (6) est réglable à une hauteur située au-dessus de la plus haute des parois de séparation ou de limitation.

9. Agencement, composé d'au moins deux évaporateurs séparés, selon la revendication 1, dont les enceintes à liquide (F) sont subdivisées, au-dessous de chaque chambre de chauffage (H) en une enceinte de captage ainsi qu'une enceinte de déversement (21b,21a respectivement 22b,22a), et pour lesquelles le liquide sortant de la chambre de chauffage est amené, en totalité ou en grande partie, dans l'enceinte de captage (21b;22b) et à chaque enceinte de déversement (21a;22a) étant raccordées une conduite de recirculation (U21;U22) et une pompe de recirculation, caractérisé en ce que l'enceinte de captage (21b;22b) de chaque évaporateur (I;II) est reliée à l'enceinte de déversement (21a;22a) de l'évaporateur disposé en aval dans le sens de l'écoulement, et en ce que le régulateur de niveau (6) est associé à l'une des enceintes reliées en communication.

10. Agencement selon la revendication 9, caractérisé en ce que les parois de séparation entre les enceintes de déversement et de captage (21a,21b, respectivement 22a,22b) son équipées dans la zone de fond d'ouvertures de passage ou de tuyauteries, pour établir une liaison ouverte de l'enceinte de déversement et de captage de l'évaporateur (I respectivement II) concerné.
